# EUROPÄISCHE PATENTSCHRIFT

(11) **EP 2 494 681 B1**
(45) Veröffentlichungstag und Bekanntmachung des Hinweises auf die Patenterteilung: **02.08.2017**
(21) Anmeldenummer: 10775758.5
(22) Anmeldetag: 22.10.2010
(51) Int. Cl.: H02K 9/20

(54) **ELEKTRISCHE MASCHINE**
ELECTRICAL MACHINE
MACHINE ÉLECTRIQUE

(30) Priorität: 28.10.2009 DE 102009051114
(43) Veröffentlichungstag der Anmeldung: 05.09.2012
(73) Patentinhaber: Siemens Aktiengesellschaft, 80333 München (DE)
(72) Erfinder: BÜTTNER, Klaus, 97618 Hollstadt (DE); DANOV, Vladimir, 91056 Erlangen (DE); REHME, Olaf, 20148 Hamburg (DE); SCHÄFER, Martin, 10557 Berlin (DE)
(86) Internationale Anmeldenummer: PCT/EP2010/065966
(87) Internationale Veröffentlichungsnummer: WO 2011/051183

(56) Entgegenhaltungen:
- EP-A1- 0 079 985
- EP-A1- 2 187 507
- GB-A- 1 283 332
- JP-A- 59 158 988
- US-A- 5 837 960
- US-A1- 2006 017 335

## Beschreibung

Die Erfindung betrifft eine elektrische Maschine. Ein Rotor und/oder ein Stator der elektrischen Maschine, beispielsweise einer Asynchronmaschine oder einer Synchronmaschine, bedürfen der Kühlung. Typischerweise werden elektrische Maschinen mit einem Luftstrom gekühlt. Auf der Welle einer Maschine befindet sich z.B. ein Lüfterrad zur Erzeugung eines kühlenden Luftstroms. Der kühlende Luftstrom wird zu am Gehäuse der Maschine vorhandene Kühlrippen gelenkt. In einer Ausführungsform der elektrischen Maschine ist zur Kühlung derselben ein Kältemittel vorgesehen. Aus der DE 10 2007 043 656 A1 ist eine Beispiel für eine derartige elektrische Maschine bekannt.

Die Veröffentlichung EP 0 079 985 A1 beschreibt eine Kühlanordnung eines elektrischen Motors, bei der die Flüssigkeit in der Heatpipe durch die Kapillarwirkung eines feinen Drahtgeflechts, das wie ein Docht wirkt, zur Verdampfersektion zurückwandert.

Die Veröffentlichung GB 1 283 332 A1 beschreibt einen Transport von Wärme entlang einer hohlen drehenden Welle zur Kühlung eines festen Körpers, z.B. eines Rotors einer elektrischen Maschine. Hierzu ist die beidseitig geschlossen Hohlwelle ohne Docht ausgeführt. Die im Bereich des Rotors an der Hohlwelle vorhandene Flüssigkeit verdampft durch die Wärmeabgabe des Rotors und gleichzeitig werden beide Enden der Welle gekühlt, so dass an den beiden Enden das Arbeitsmedium an der inneren Oberfläche der Welle wieder kondensiert. Unter der Wirkung der Zentrifugalkraft fließt das Arbeitsmedium entlang der inneren Oberfläche der Hohlwelle zurück zu dem Bereich des Rotors. In einigen Fällen ist es praktisch zur Trennung des Pfades des verdampften Arbeitsmediums vom Pfad des flüssigen Arbeitsmediums Rohre in der Welle anzuordnen. Dies können z.B. durch Netze in der Welle fixiert werden.

Die Veröffentlichung US 5 837 960 A beschreibt ein Verfahren und eine Vorrichtung zum Formen von Gegenständen, insbesondere Metallartikel, aus partikelförmigen, d.h. pulverförmigen Materialien, in dem die Materialien mit einem Laserstrahl geschmolzen werden und sich an den Punkten entlang einer Werkzeugbahn abscheiden, um einen Gegenstand der gewünschten Form und Abmessung zu bilden. Vorzugsweise wird die Werkzeugbahn und andere Parameter des Abscheidungsprozesses mit Computer-Aided-Design- und Computer-Aided-Manufacturing-Techniken ermittelt. In einem Ausführungsbeispiel wird ein Gegenstand als ein Gegenstand angesehen, der aus einer Vielzahl von dünnen Schichten aus einem abgeschiedenen Material besteht. So kann beispielsweise bei der Herstellung einer Röhre oder dünnwandigen Hohlzylinders die Werkzeugbahn als eine große Anzahl von Kreisen angesehen werden. So kann in einem Durchgang einer Abscheidungszone oder einer Bewegung der Zone um 360 Grad um den Umfang des Rohrs ein Rohr mit einem Außendurchmesser von 0,85 Zoll und eine Wanddicke von 0,075 Zoll in der Höhe oder der Länge um 0,004 Zoll vergrößert werden.

Die Veröffentlichung US 2006/0017335 A1 beschreibt eine elektrische Maschine mit einem Stator und einem Rotor, die in einem abgedichteten Gehäuse untergebracht sind. Ein abgedichteter Behälter kann stationär oder drehbar mit der Rotorwelle verbunden sein. In einem Ausführungsbeispiel ist ein Pumpenlaufrad ein externer Kühlkörper für die Motorkühlung, wobei das Pumpenlaufrad mit der Welle und einem Rohr als abgedichteten Behälter gekoppelt ist. Die Drehbewegung des Rotors wird verwendet, um in der Rohrleitung gebildetes Kondensat zu der heißen Verdampferseite zurückzubringen, wobei sich das Kondensat durch die externe Wärmeabgabe über das Pumpenlaufrad in der Rohrleitung gebildet hat. In dem Rohr bewirkt ein in einem ringförmigen Abschnitt des Rohrs integrierter schraubenförmiger Abschnitt ein Fließen des Kühlfluids gegen die Schwerkraft. Eine Schräge, die sich in Richtung des Kondensators erstreckt erzeugt eine axiale Komponente der Zentrifugalkraft, die dem Kondensat bei der Rückkehr in den Verdampfer hilft. Die Schräge erhöht den Wärmetransferkoeffizienten des Rohres, da die Erzeugung eines Kondensatfilms im Rohr minimiert wird. Der schraubenförmige Abschnitt verbessert die Performance einer rotierenden Heatpipe im Vergleich zu einer Heatpipe ohne schraubenförmigen Abschnitt bei niedrigen Geschwindigkeiten.

Die Veröffentlichung EP 2 187 507 A1 ist Stand der Technik nach Artikel 54 (3) des EPÜ. Diese Veröffentlichung beschreibt eine Elektromaschine für ein Automobil mit einer Welle, die innen hohl ist, so dass sie einen sich in Längsrichtung erstreckenden mittigen Kühlkanal aufweist, der mit einem Kühlfluid gefüllt ist und ein erstes Drückelement und ein zweites konzentrisch im Inneren des ersten Drückelement angeordnetes zweites Drückelement aufweist. Das erste Drückelement und das zweite Drückelement sind spiralförmig ausgebildet, um jeweils eine Schnecke zu definieren, die sich innerhalb des Kühlkanals entlang der Drehachse erstreckt, um das Kühlfluid durch deren Drehbewegung entlang der Drehachse zu drücken. Das erste Drückelement transportiert durch seine Drehbewegung das Kühlfluid in eine erste Richtung entlang der Drehachse. Damit das erste Drückelement mit der Welle um die Rotationsachse rotiert, ist es integral mit der Welle integral ausgebildet. Das zweite Drückelement transportiert durch seine Drehbewegung das Kühlfluid in einer zur ersten Richtung entlang der Drehachse entgegengesetzten Richtung. Damit das zweite Drückelement mit der Welle um die Rotationsachse rotiert, ist es integral mit der Welle ausgebildet. Weiterhin ist mit der Welle ein rohrförmigen Trennkörper integral ausgebildet ist, so dass er sich mit der Welle um die Drehachse dreht, und im Inneren des Kühlkanals zwischen dem ersten Drückelement und dem zweiten Drückelement angeordnet ist, um eine erste Kammer, die das erste Drückelement aufnimmt, und eine zweite Kammer zu definieren, die das zweite Drückelement aufnimmt.

Eine Aufgabe der vorliegenden Erfindung ist es, die Kühlung der elektrischen Maschine zu verbessern.

Die Aufgabe wird erfindungsgemäß durch eine elektrische Maschine welche einen Stator und einen Rotor aufweist, gelöst, wobei der Rotor eine Hohlwelle aufweist, wobei mittels der Hohlwelle ein abgeschlossener Hohlraum ausgebildet ist, wobei der abgeschlossene Hohlraum zur Aufnahme eines Kältemittels vorgesehen ist, wobei im abgeschlossenen Hohlraum eine dreidimensionale Transportstruktur zum Transport des Kältemittels vorgesehen ist, wobei die dreidimensionale Transportstruktur eine Vielzahl von Flügel aufweist, wobei eine erste Vielzahl von Flügeln eine erste Flügelstellung aufweisen und wobei ein zweite Vielzahl von Flügeln eine zweite Flügelstellung aufweisen, wobei die erste Flügelstellung zum Transport des Kältemittels in einem ersten Aggregatszustand vorgesehen ist und wobei die zweite Flügelstellung zum Transport des Kältemittels in einem zweiten Aggregatszustand vorgesehen ist.

Die Aufgabe wird darüber hinaus erfindungsgemäß durch eine elektrische Maschine welche einen Stator und einen Rotor aufweist, gelöst, wobei der Rotor eine Hohlwelle aufweist, wobei mittels der Hohlwelle ein abgeschlossener Hohlraum ausgebildet ist, wobei der abgeschlossene Hohlraum zur Aufnahme eines Kältemittels vorgesehen ist, wobei im abgeschlossenen Hohlraum eine dreidimensionale Transportstruktur zum Transport des Kältemittels vorgesehen ist, wobei die dreidimensionale Transportstruktur eine schraubenartige Struktur oder eine schneckenartige Struktur aufweist, wobei eine erste schraubenartige Struktur oder eine schneckenartige Struktur eine erste Windungsrichtung aufweist und wobei ein zweite schraubenartige Struktur oder eine schneckenartige Struktur eine zweite Windungsrichtung aufweist, wobei die erste Windungsrichtung zum Transport des Kältemittels in einem ersten Aggregatszustand vorgesehen ist und wobei die zweite Windungsrichtung zum Transport des Kältemittels in einem zweiten Aggregatszustand vorgesehen ist, wobei ein in den Hohlraum separat einbringbarer und befestigbarer Füllkörper die schraubenartige Struktur oder schneckenartige Struktur mit der ersten Windungsrichtung und der zweiten Windungsrichtung aufweist.

Ferner wird die Aufgabe erfindungsgemäß durch eine elektrische Maschine, welche einen Stator und einen Rotor aufweist, gelöst, wobei der Rotor eine Hohlwelle aufweist, wobei mittels der Hohlwelle ein abgeschlossener Hohlraum ausgebildet ist, wobei der abgeschlossene Hohlraum zur Aufnahme eines Kältemittels vorgesehen ist, wobei im abgeschlossenen Hohlraum eine dreidimensionale Transportstruktur zum Transport des Kältemittels vorgesehen ist, wobei die dreidimensionale Transportstruktur eine schraubenartige Struktur oder eine schneckenartige Struktur aufweist, wobei eine erste schraubenartige Struktur oder eine schneckenartige Struktur eine erste Windungsrichtung aufweist und wobei eine zweite schraubenartige Struktur oder eine schneckenartige Struktur eine zweite Windungsrichtung aufweist, wobei die erste Windungsrichtung zum Transport des Kältemittels in einem ersten Aggregatszustand vorgesehen ist und wobei die zweite Windungsrichtung zum Transport des Kältemittels in einem zweiten Aggregatszustand vorgesehen ist, wobei ein Thermosiphon der elektrischen Maschine die dreidimensionale Transportstruktur, einen Verdampfer und einen konusförmigen Kondensator aufweist.

Überdies wird die Aufgabe erfindungsgemäß durch eine elektrische Maschine, welche einen Stator und einen Rotor aufweist, gelöst, wobei der Rotor eine Hohlwelle aufweist, wobei mittels der Hohlwelle ein abgeschlossener Hohlraum ausgebildet ist, wobei der abgeschlossene Hohlraum zur Aufnahme eines Kältemittels vorgesehen ist, wobei im abgeschlossenen Hohlraum eine dreidimensionale Transportstruktur zum Transport des Kältemittels vorgesehen ist, wobei die dreidimensionale Transportstruktur eine schraubenartige Struktur oder eine schneckenartige Struktur aufweist, wobei eine erste schraubenartige Struktur oder eine schneckenartige Struktur eine erste Windungsrichtung aufweist und wobei eine zweite schraubenartige Struktur oder eine schneckenartige Struktur eine zweite Windungsrichtung aufweist, wobei die erste Windungsrichtung zum Transport des Kältemittels in einem ersten Aggregatszustand vorgesehen ist und wobei die zweite Windungsrichtung zum Transport des Kältemittels in einem zweiten Aggregatszustand vorgesehen ist, wobei in dem abgeschlossenen Hohlraum das Kältemittel nach einem Thermosiphoneffekt zwischen einem warmen und einem kalten Ende der Hohlwelle zirkulierbar ist, wobei der den Rotor umgebende Stator innerhalb eines Gehäuses angeordnet und mit diesem thermisch verbunden ist, wobei das Gehäuse stirnseitig zugängliche Kühlkanäle zur Zufuhr eines kühlenden Luftstroms zu auf der Außenseite des Gehäuses vorhandenen Kühlrippen aufweist, wobei stirnseitig des Rotors auf dem kalten Ende der Hohlwelle ein Lüfterrad zum Transport von Kaltluft in die Kühlkanäle montiert ist, welches mit dem kalten Ende der Hohlwelle in thermischer Verbindung steht, wobei das Lüfterrad durch eine Haube, die stirnseitig mit dem Gehäuse strömungsdicht abschließt, vollständig abgedeckt ist, wobei die Haube eine axiale Zuluftöffnung aufweist, wobei das Lüfterrad in seinen radial innen liegenden Bereichen in die Zuluftöffnung hineinragende Wärmeübergangsflächen aufweist.

Eine elektrische Maschine, welche einen Stator und einen Rotor aufweist, wobei der Rotor eine Hohlwelle hat, wobei die Hohlwelle zumindest teilweise mit einen abgeschlossenen Hohlraum ausbildet, wobei der abgeschlossene Hohlraum zur Aufnahme eines Kältemittels vorgesehen ist, weist im abgeschlossenen Hohlraum eine dreidimensionale Transportstruktur zum Transport des Kältemittels auf. Hierdurch kann die Effektivität der Kühlung eines Thermosiphons verbessert werden.

Flügel, eine Schraubenstruktur, eine Schneckenstruktur sind Beispiele für eine dreidimensionale Transportstruktur. Flächenstücke für die Schneckenstruktur bzw. die Schraubenstruktur können unterbrochen oder durchgängig ausgeführt sein.

Die dreidimensionale Transportstruktur weist eine Vielzahl von Flügeln auf, wobei insbesondere eine erste Vielzahl von Flügel eine erste Flügelstellung aufweisen und wobei insbesondere ein zweite Vielzahl von Flügel eine zweite Flügelstellung aufweisen, wobei die erste Flügelstellung zum Transport des Kältemittels in einem ersten Aggregatszustand vorgesehen ist und wobei die zweite Flügelstellung zum Transport des Kältemittels in einem zweiten Aggregatszustand vorgesehen ist. Die Flügel in der ersten Flügelstellung stellen dabei beispielhaft die erste dreidimensionale Transportstruktur dar und die Flügle in der zweiten Flügelstellung stellen die zweite dreidimensionale Transportstruktur dar.

Die dreidimensionale Transportstruktur weist eine schraubenartige Struktur oder eine schneckenartige Struktur auf, wobei insbesondere eine erste schraubenartige Struktur oder eine schneckenartige Struktur eine erste Windungsrichtung aufweist und wobei insbesondere eine zweite schraubenartige Struktur oder eine schneckenartige Struktur eine zweite Windungsrichtung aufweist, wobei die erste Windungsrichtung zum Transport des Kältemittels in einem ersten Aggregatszustand vorgesehen ist und wobei die zweite Windungsrichtung zum Transport des Kältemittels in einem zweiten Aggregatszustand vorgesehen ist. Die unterschiedlichen dreidimensionalen Transportstrukturen unterscheiden sich folglich in der Windungsrichtung. In einer Ausgestaltung weisen die beiden Windungsrichtungen unterschiedliche Steigungen auf. Ein Füllkörper kann dabei beide Strukturen aufweisen oder auch nur eine, wobei sich dann die andere Struktur beispielsweise auf der Innenwand des Hohlraumes der Hohlwelle befindet.

Die elektrische Maschine weist beispielsweise einen auf einer Hohlwelle gelagerten Rotor auf, wobei die Hohlwelle in ihrem Inneren einen abgeschlossenen Hohlraum ausbildet, in welchem ein Kältemittel nach einem Thermosiphoneffekt zwischen einem warmen und einem kalten Ende der Hohlwelle zirkulierbar ist. Die elektrische Maschine umfasst einen Stator, der insbesondere innerhalb eines Gehäuses angeordnet ist und den Rotor umgibt. Der Stator ist thermisch mit dem Gehäuse verbunden. Das Gehäuse weist beispielsweise stirnseitig zugängliche Kühlkanäle zur Zufuhr eines kühlenden Luftstroms an auf der Außenseite des Gehäuses vorhandene Kühlrippen auf.

Bei Elektromotoren kann eine bessere Abkühlung des Rotors zu einer Erhöhung des Wirkungsgrads führen. Die Kühlung des Rotors kann mit einem Wellen-Thermosiphon in der Rotorwelle erreicht werden. Durch die Kühlung der Welle wird auch der Rotor des Elektromotors gekühlt, wodurch sich die erwünschte Wirkungsgraderhöhung ergibt. Die von dem Rotor abgeführte Wärme wird über den Thermosiphon z.B. an eine weitere Kühleinrichtung übertragen.

Zusätzlich zu einer Kühlung des Gehäuses und somit des Stators einer elektrischen Maschine ist es möglich, den Rotor der elektrischen Maschine auf der Hohlwelle zu lagern, in welcher das Kältemittel nach dem Thermosiphoneffekt zirkuliert. Durch eine derartige Ausgestaltung der Rotorwelle ist es möglich, insbesondere im Rotor entstehende Wärme zentral über die Welle der elektrischen Maschine abzuführen. Somit kann die Wärmeabfuhr aus der elektrischen Maschine sowohl über den Stator als auch über den Rotor erfolgen.

Gemäß einer Ausgestaltung ist zur Ausbildung des Thermosiphons in der Welle eine sich in Längsrichtung erstreckende Ausnehmung vorgesehen, in welcher das Arbeitsmedium (Kühlmittel) aufgrund einer Änderung des Aggregatzustands zwischen flüssig und gasförmig zirkulieren kann. Es ist hierbei zweckmäßig, wenn sich die Ausnehmung über die gesamte Breite des Rotors des Elektromotors erstreckt, damit ein möglichst guter Wärmeeintrag in das Arbeitsmedium in dem Thermosiphon erfolgen kann. Darüber hinaus kann die Ausnehmung im Bereich von Lagerstellen des Elektromotors ausgebildet ist. Zusätzlich zur Abkühlung des Rotors werden auch Lagertemperaturen an den Lagerstellen des Antriebsstrangs vergleichmäßigt und verringert, wodurch sich die Lebensdauer dieser hochbelasteten Verschleißteile erhöht.

Um einen kühlenden Luftstrom, welcher auf die Außenseite eines Gehäuses gelenkt wird, zu erzeugen und gleichzeitig ein Ende der Hohlwelle der Maschine derart zu kühlen, dass die Zirkulation des in der Hohlwelle vorhandenen Kältemittels nach einem Thermosiphoneffekt aufrechterhalten werden kann, kann ein Lüfter eingesetzt werden.

Bei einem luftgekühlten Antrieb wird beispielsweise die Umgebungsluft mit Hilfe eines Lüfters entlang des berippten Antriebsgehäuses geleitet. Dadurch wird die Maschine von außen gekühlt. Zur Abfuhr der Wärme können verschiedene Pfade beitragen. Zum einen können Wärmeverluste im Ständer direkt über Wärmeleitung an das Gehäuse übertragen werden. Die Wärme, die im Rotor entsteht, wird über Strahlung und Konvektion im Luftspalt an den Ständer abgegeben. Von dort kann die Wärme über das Gehäuse an die Umgebung übertragen werden. Um die Abfuhr der Rotorabwärme der Maschine zu verbessern, gibt es die Möglichkeit, durch ein in die Welle eingebautes Thermosiphonsystem die Wärme direkt an den Lüfter und von dort an die Luft zu übertragen.

Die elektrische Maschine mit einem auf einer Hohlwelle gelagerten Rotor kann derart ausgebildet sein, dass die Hohlwelle in ihrem Inneren einen abgeschlossenen Hohlraum ausbildet, in welchem das Kältemittel (Kühlmittel) nach dem Thermosiphoneffekt zwischen einem warmen und kalten Ende der Hohlwelle zirkulierbar ist. Die elektrische Maschine weist einen den Rotor umgebenden Stator auf, der innerhalb eines Gehäuses angeordnet ist und mit diesem thermisch verbunden ist. Das Gehäuse der Maschine weist stirnseitig zugängliche Kühlkanäle zur Zufuhr eines kühlenden Luftstroms zu auf der Außenseite des Gehäuses vorhandenen Kühlrippen auf. Stirnseitig des Rotors der elektrischen Maschine ist auf dem kalten Ende der Hohlwelle ein Lüfterrad zum Transport von Kaltluft in die Kühlkanäle montiert, welches mit dem kalten Ende der Hohlwelle in thermischer Verbindung steht. Das Lüfterrad ist z.B. durch eine Haube, die stirnseitig mit dem Gehäuse strömungsdicht abschließt, vollständig abgedeckt. Die Haube weist z.B. eine axiale Zuluftöffnung auf, wobei das Lüfterrad in seinen radial innen liegenden Bereichen in die Zuluftöffnung hineinragende Wärmeübergangsflächen aufweist. Mit Hilfe des Lüfterrades kann ein Luftstrom erzeugt werden, welcher den auf der Außenseite des Gehäuses vorhandenen Kühlrippen zugeführt wird. Mit demselben Lüfter kann gleichzeitig das kalte Ende der Hohlwelle gekühlt werden, so dass in dem Innenraum der Hohlwelle ein Thermosiphoneffekt aufrechterhalten werden kann.

Wenn der Durchmesser des Thermosiphons kleiner gebaut wird, kann dies zu einem Druckverlust führen, welcher die Funktion des Thermosiphons negativ beeinflussen kann. Bei sich drehenden Thermosiphons, insbesondere mit kleinen Durchmessern des Hohlraums der Hohlwelle des Rotors der elektrischen Maschine kann ein Mittel zum Transport des Kondensats und/oder des Dampfes des Kühlmittels vorgesehen werden.

In einer weiteren vorteilhaften Ausgestaltung ist die dreidimensionale Transportstruktur derart ausgebildet, dass ein Transport des Kältemittels mittels einer Rotation der dreidimensionalen Transportstruktur hervorrufbar ist.

Durch die dreidimensionale Formgebung der Transportstruktur ist eine Transportfunktionalität für das Kältemittel bei einer Rotation des Rotors ermöglicht. Die dreidimensionale Transportstruktur rotiert mit dem Rotor der elektrischen Maschine mit.

In besonders vorteilhafter Weise ist die dreidimensionale Transportstruktur eine offenporige Schaumstruktur oder eine spiralförmige Kanalstruktur.

Weitere Beispiele für dreidimensionale Transportstrukturen sind mikroskalige, düsenartige Gitterstrukturen, die z.B. ähnlich einem offenporigen Schaum gestaltet sind, oder spiralförmige Kanäle. Unabhängig von der Ausgestaltung der dreidimensionalen Transportstruktur dient jeweils zumindest ein Teilbereich der Struktur für den Transport des Fluids (flüssig bzw. gasförmig) in eine definierte Richtung. Damit wird z.B. der Füllkörper in die Lage versetzt, durch Rotation um seine Längsachse in eine festgelegte Drehrichtung ein Fluid nahe der Rotationsachse, wie z.B. Dampf, in eine festgelegte Richtung entlang der Rotationsachse zu transportieren und gleichzeitig das gleiche oder ein anderes Fluid fern der Rotationsachse, wie z.B. Kondensat, in die entgegengesetzte Richtung zu transportieren.

In einer Ausgestaltung der elektrischen Maschine ist im Hohlraum der Hohlwelle ein Füllkörper vorgesehen, wobei der Füllkörper eine erste dreidimensionale Transportstruktur zum Transport des Kältemittels aufweist, wobei sich das Kältemittel in einem ersten Aggregatszustand befindet. Dabei füllt das Füllmittel den Hohlraum der Hohlwelle nicht vollständig.

Durch einen Transport des Dampfes und/oder Kondensats kann aktiv die Kühlleistung verbessert werden. Dieser Transport kann nicht nur durch einen Füllkörper im Hohlraum der Hohlwelle gewährleistet werden. Der Füllkörper füllt den Hohlraum der Hohlwelle nicht vollständig aus sonder lässt Passagen zum Transport des Kühlmittels frei. Der Füllkörper kann z.B. wie ein in sich verdrehtes Schraubengebilde ausgebildet sein. Dabei ändert sich die Neigung dieser Schraube von einer Wand in Richtung Zentrum so, dass der äußere Teil der Schraube das Kondensat vom Kondensator in Richtung Verdampfer transportiert und der innere Teil der Schraube den Dampf in Richtung Kondensator transportiert. Die Herstellung von solchen Gebilden erfolgt beispielsweise mittels eines Gießverfahrens und/oder eines Fräsverfahrens. Auch andere Herstellungsmethoden wie diese aus dem Rapid Prototyping bekannt sind oder "Selective Laser Melting" sind anwendbar.

Mit der dreidimensionalen Transportstruktur lässt sich z.B. der Arbeitsbereich des Thermosiphons erhöhen. Der Arbeitsbereich eines Thermosiphons hängt vom Wärmeübertragungskoeffizienten im Verdampfer und im Kondensator sowie von Transportprozessen ab. Unter Transportprozessen kann man den Rücktransport des Kondensats und den Transport des entstandenen Dampfes verstehen. Der Transport des Kondensates wird durch Fliehkräfte befördert. Zudem kann ein konusförmiger Kondensator den Transport verbessern. Der Transport des Dampfes kann auch durch eine Saugwirkung des Kondensationsprozesses bedingt werden.

In einer Ausgestaltung der elektrischen Maschine weist der Füllkörper im Hohlraum der Hohlwelle neben der ersten dreidimensionalen Transportstruktur eine zweite dreidimensionale Transportstruktur zum Transport des Kältemittels auf, wobei sich das Kältemittel in einem zweiten Aggregatszustand befindet.

In einer Ausgestaltung der elektrischen Maschine weist eine Innenwand des Hohlraums der Hohlwelle die erste dreidimensionale Transportstruktur zum Transport des Kältemittels in einem ersten Aggregatszustand auf. Die Innenwand kann zusätzlich auch eine zweite dreidimensionale Transportstruktur zum Transport des Kältemittels in einem zweiten Aggregatszustand aufweisen. Die beiden Aggregatszustände sind flüssig und gasförmig (Dampf). Ein separater in den Hohlraum eingebrachter und dort befestigter Füllkörper ist folglich nicht unbedingt notwendig.

In einer Ausgestaltung der elektrischen Maschine kann die Hohlwelle also eine dreidimensionale Transportstruktur zum Transport eines Kondensats des Kältemittels aufweisen, wobei diese Struktur beispielsweise die erste Transportstruktur darstellt und ein in dem Hohlraum eingeführter und dort befestigter Füllkörper die zweite Transportstruktur für den zweiten Aggregatszustand aufweist. Dabei ist die erste Transportstruktur zum Transport eines Kondensats in die Hohlwelle hinein vorgesehen und die zweite Transportstruktur auf dem Füllkörper zum Transport von Dampf aus der Hohlwelle hinaus vorgesehen.

Der Füllkörper, der die Hohlwelle teilweise füllt, bewirkt durch Rotation um seine Längsachse in eine festgelegte Drehrichtung beispielsweise den Transport eines Fluids nahe der Rotationsachse, wie z.B. Dampf, in eine festgelegte Richtung entlang der Rotationsachse und gleichzeitig den Transport des gleichen oder eines anderen Fluid fern der Rotationsachse, wie z.B. Kondensat, in die entgegengesetzte Richtung.

In einer Ausgestaltung wird ein Verfahren zur Herstellung einer dreidimensionalen Transportstruktur zum Transport eines Kältemittels eines Thermosiphons einer elektrischen Maschine verwendet, wobei zur Ausbildung der dreidimensionalen Transportstruktur ein additiver Materialauftrag verwendet wird.

Additive Fertigungsverfahren ermöglichen hohe Freiheitsgrade in der Gestaltung von Bauteilen und dreidimensionalen Strukturen, die mit konventionellen Herstellverfahren nicht immer erzielt werden können. Bei diesen Verfahren werden Bauteile beispielsweise in einem metallischen Pulverbett mit einem energetischen Strahl als Werkzeug (wie z.B. ein Laser- oder ein Elektronenstrahl) hergestellt. Der Strahl dient dabei zum selektiven Aufschmelzen dünner Pulverschichten. Diese Fertigungsverfahren basieren vorteilhaft auf der Verarbeitung von CAD Daten, die dreidimensionale Objekte durch Volumenmodelle oder Oberflächenmodelle beschreiben. Zur Verarbeitung in einem Fertigungsprozess werden diese Daten in Schichtdaten überführt, wobei jede Schicht einem Querschnitt des Bauteils mit finiter Schichtdicke entspricht. Diese Querschnittsgeometrie wird während der Fertigung beispielsweise durch eine linienartige Belichtung der äußeren Konturen oder einer flächenartigen Belichtung der zu füllenden Querschnittsfläche hergestellt. Die linienartige Belichtung wird aufgrund der punktförmigen Charakteristik des Strahls durch eine entsprechende Strahlbewegung realisiert. Die flächenartige Belichtung erfolgt z.B. durch eine Aneinanderreihung von linienartigen Belichtungsvorgängen.

Vorteilhaft wird ein metallisches Material verwendet, wobei insbesondere ein strahlbasiertes Pulverbettverfahren verwendet wird

Die dreidimensionale Transportstruktur zum Transport eines Kältemittels eines Thermosiphons einer elektrischen Maschine kann mittels eines additiven Materialauftrags hergestellt werden. Beispielsweise wird ein strahlbasiertes Pulverbettverfahren verwendet.

In einer vorteilhaften Ausgestaltung wird Selectives Laser Melting verwendet.

Mit einem additiven Fertigungsverfahren, wie z.B. dem unter der Bezeichnung "Selective Laser Melting" (SLM) bekannten Prozess, lassen sich insbesondere komplexe Geometrien aus metallischen Werkstoffen wirtschaftlich in kleinen bis großen Stückzahlen herstellen. Ein Füllkörper, welcher mittels eines additiven Verfahrens, insbesondere aus metallischen Materialien, insbesondere durch strahlbasierte Pulverbettverfahren wie z.B. dem Selective Laser Melting (SLM), hergestellt ist kann im Betrieb der elektrischen Maschine hohen Temperaturen ausgesetzt werden.

Die Herstellung des Füllkörpers bzw. der dreidimensionalen Transportstruktur kann auch mit anderen Werkstoffen, wie z.B. keramischen Materialien oder aus Kunststoffen erfolgen. Sie kann auch durch Verfahren erfolgen, die nicht strahlbasiert sind, wie z.B. 3D-Druckverfahren, oder durch Verfahren, die kein Pulverbett benötigen, wie z.B. Laserauftragschweißen.

Die obig beschriebene Ausgestaltung eines Thermosiphons mit dem Füllkörper zum Zweck des gegenläufigen Transports von Kondensat und Dampfstrom erfordert die Fertigung einer dreidimensionalen Transportstruktur, die chemisch beständig gegenüber dem eingesetzten Kühlmittel ist.

Die strahl- und pulverbettbasierten, additiven Fertigungsverfahren erlauben durch z.B. linienartige Belichtungsmuster insbesondere die Herstellung von dünnwandigen Strukturen, die z.B. als Flügel Bestandteil des Füllkörpers sein können. Derartige Belichtungsmuster müssen jedoch nicht auf bereits vorhandenen 3D-CAD Daten basieren. Daher kann der Einsatz angepasster Belichtungsmuster notwendig sein. Mittels des additiven Fertigungsverfahrens ergeben sich insbesondere Vorteile bei der Ausbildung von Thermosiphons mit kleinem Bohrungsdurchmesser.

Bei der Herstellung eines Füllkörpers mittels des Selective Laser Melting (SLM) können linienartige an Stelle von flächenartigen Belichtungsmustern zur Herstellung dünnster Wandstärken verwendet werden. Damit lassen sich beispielsweise flügelartige Elementen des Füllkörpers verwendet werden. Derartige Strukturen müssen nicht unmittelbar aus vorliegenden 3D-CAD Konstruktionsdaten hervor gehen, sondern können durch eine direkte Steuerung des Laserstrahls über das Pulverbett erzeugt werden.

Weitere mögliche vorteilhafte Ausgestaltungen der elektrischen Maschine gehen aus den nachfolgend erläuterten Beispielen hervor, welche mittels Zeichnungen näher erläutert sind. In der Zeichnung sind Ausführungsbeispiele der erfindungsgemäßen elektrischen Maschine in schematisierter Darstellung angedeutet. Dabei zeigen deren
- FIG 1: eine erste elektrische Maschine in einem Längsschnitt;
- FIG 2: ein Lüfterrad für die elektrische Maschine;
- FIG 3: eine Hohlwelle einer elektrischen Maschine;
- FIG 4: eine zweite elektrische Maschine in einem Längsschnitt;
- FIG 5: eine erste dreidimensionale Transportstruktur;
- FIG 6: eine zweite dreidimensionale Transportstruktur; und
- FIG 7: eine dritte dreidimensionale Transportstruktur;

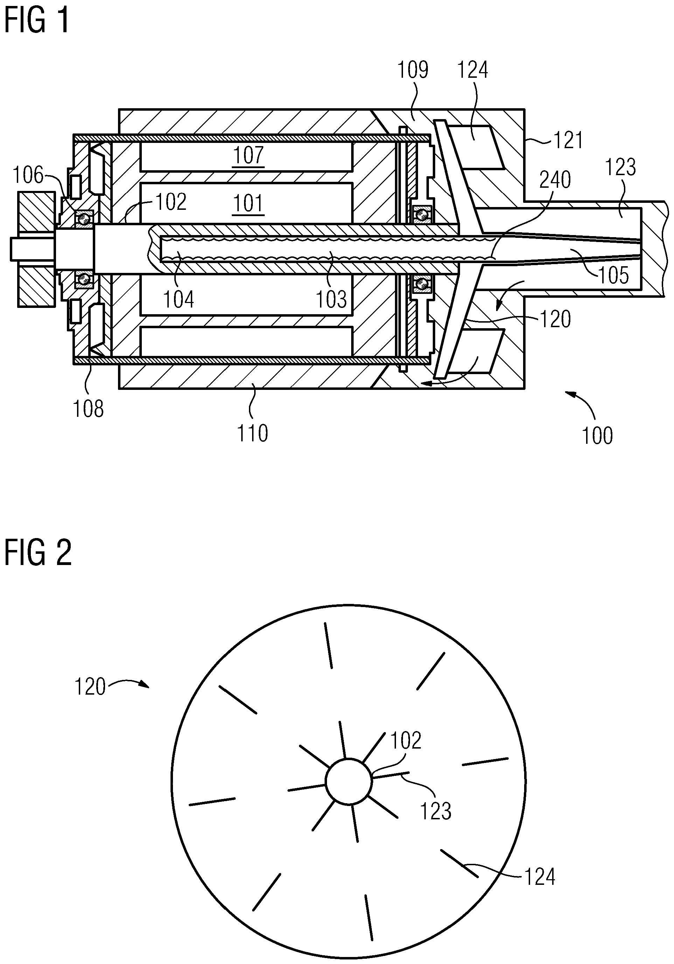

FIG 1 zeigt eine elektrische Maschine 100 gemäß einem Ausführungsbeispiel. Die elektrische Maschine 100 umfasst einen Rotor 101, welcher auf einer Hohlwelle 102 gehalten ist. Die Hohlwelle 102 ist durch Lager 106 gegenüber dem Gehäuse 108 der elektrischen Maschine gelagert. Die Hohlwelle 102 bildet in ihrem Inneren einen Hohlraum 103 aus, in dem ein Kältemittel nach einem Thermosiphoneffekt zirkulierbar ist. Die Hohlwelle 102 weist im Bereich des Rotors 101 ein warmes Ende 104 und im Bereich eines Lüfterrades 120 ein kaltes Ende 105 auf. Der Rotor 102 der elektrischen Maschine 100 wird von einem Stator 107 umgeben. Der Stator 107 ist wiederum in einem Gehäuse 108 gehalten und von diesem umgeben. Das Gehäuse 108 weist auf seiner Außenseite Kühlrippen 110 auf, welche durch Kühlkanäle 109 im Betrieb von einem kühlenden Luftstrom umströmt sind.

Auf dem kalten Ende 105 der Hohlwelle 102 befindet sich ein Lüfterrad 120. Das Lüfterrad 120 ist von einer geschlossenen Haube 121 vollständig abgedeckt. Die Habe 121 schließt mit dem Gehäuse 108 strömungsdicht gegenüber diesem ab. Die Haube 121 weist eine Zuluftöffnung im axialen Bereich der elektrischen Maschine 100 auf.

Das Lüfterrad 120 weist Lüfterschaufeln 124 zur Erzeugung eines kühlenden Luftstroms sowie Wärmeübergangsflächen 123 auf. Durch die Zuluftöffnung 122 einströmende Kaltluft wird nach dem Eintritt in den gegebenenfalls düsenförmigen Halsbereich 125 der Haube 121 auf die Wärmeübergangsflächen 123 gelenkt. Die Wärmeübergangsflächen 123 stehen in thermischer Verbindung mit dem kalten Ende 105 der Hohlwelle 102. Die durch den Wärmeaustausch gegebenenfalls leicht erwärmte Kaltluft strömt durch die Kühlkanäle 109 zu den auf der Außenseite des Gehäuses 108 der elektrischen Maschine 100 vorhandenen Kühlrippen 110. Der Luftstrom wird dabei im Wesentlichen von den Lüfterschaufeln 124 getrieben. Die Innenwand des Hohlraumes 103 weist eine dreidimensionale Transportstruktur 240 auf, welche dem Transport von Kondensat des Kühlmittels dient.

FIG 2 zeigt das Lüfterrad 120 in Draufsicht. Im radial innen liegenden Bereich, in der Nähe der Hohlwelle 102, weist das Lüfterrad 120 Wärmeübergangsflächen 123 auf. Im radial äußeren Bereich weist das Lüfterrad 120 Lüfterschaufeln 124 auf. Das Lüfterrad 120 kann insbesondere in Bezug auf die Lüfterschaufeln 124 nach der Art eines Radiallüfters wirksam und ausgebildet sein.

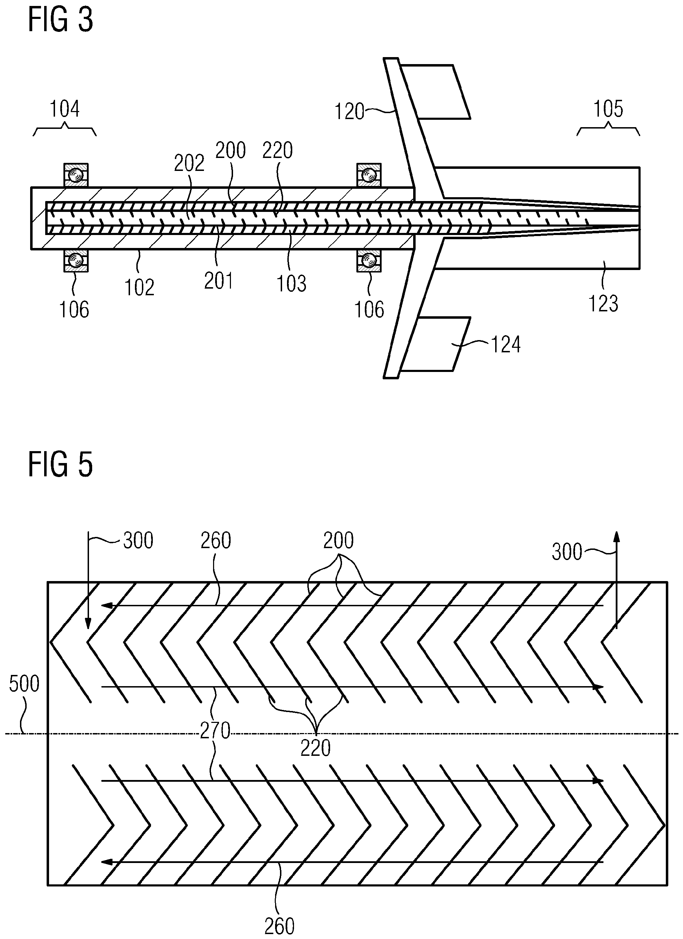

FIG 3 zeigt eine Hohlwelle 102 einer elektrischen Maschine 100 gemäß eines Ausführungsbeispiels. Die Hohlwelle 102 weist einen Füllkörper 201. Die Hohlwelle 102 weist in ihrem Inneren einen Hohlraum 103, den Füllkörper 201 sowie einen von dem Füllkörper 201 umschlossenen weiteren Hohlraum 202 auf. Der Hohlraum 103 und der weitere Hohlraum 202 sind beispielsweise über Löcher im Füllkörper 201, welche in der FIG 3 nicht dargestellt sind, miteinander verbunden. Der Füllkörper weist eine erste dreidimensionale Transportstruktur 200 zum Transport des Kältemittels in einem ersten Aggregatszustand auf. Der erste Aggregatszustand betrifft beispielsweise eine Flüssigkeit. Der Füllkörper 201 weist auch eine zweite dreidimensionale Transportstruktur 220 zum Transport des Kältemittels in einem zweiten Aggregatszustand auf. Der zweite Aggregatszustand betrifft beispielsweise ein Gas.

Durch einen rotierenden Thermosiphon, kann eine Verbesserung des Arbeitsbereiches der Maschine erreicht werden. Durch den in den rotierenden Thermosiphon eingebrachten Füllkörper 201 wird der Transport dort enthaltenen Fluids nicht allein durch die Konizität der Bohrung und die Fliehkraftwirkung auf das Kondensat und der daraus resultierenden Sogwirkung auf den Dampf bewirkt. Vielmehr wird das Fluid aktiv durch die Formgebung von entsprechenden Führungselementen, also der dreidimensionalen Struktur, geführt, die insbesondere Bestandteil der Geometrie des Füllkörpers sind. Dadurch gelingt der Transport des Fluids insbesondere auch bei rotierenden Thermosiphons mit kleinem Bohrungsdurchmesser. Der Füllkörper 201 weist eine erste dreidimensionale Transportstruktur 200 zum Transport von Kondensat und eine zweite dreidimensionale Transportstruktur 220 zum Transport von Dampf auf, wobei sich die Anzahl der Flügel je nach Transportfluid unterscheiden können.

Durch Einsatz des Füllkörpers 201 wird eine Verbesserung der Funktion der Kühlung auch bei senkrecht aufgestellten Rotorwellen erzielt. Selbst wenn der Kondensator unten und der Verdampfer auf höherer Ebene platziert ist, erfolgt ein Transport des Fluids aktiv.

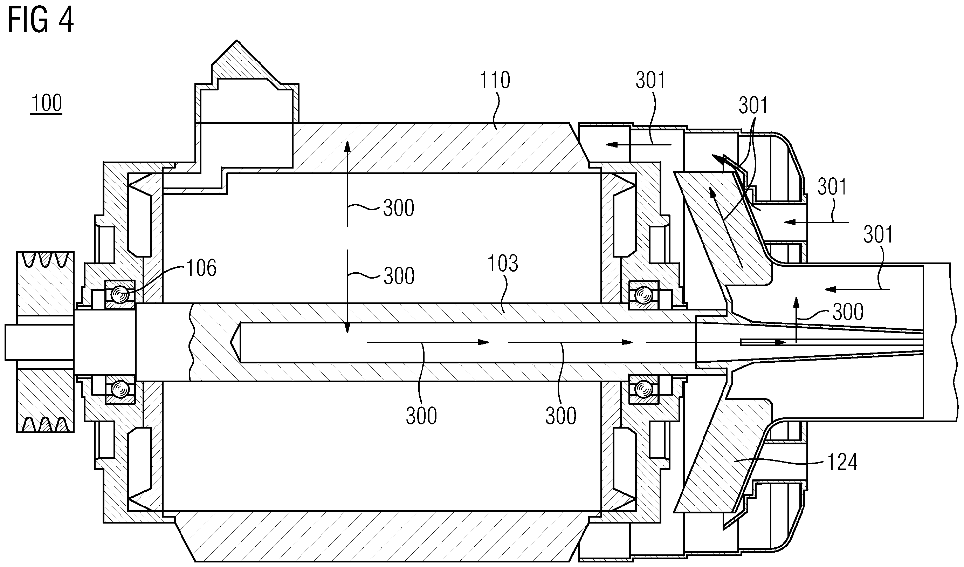

FIG 4 zeigt im Längsschnitt eine elektrische Maschine 100, wobei Wärmeströme mit dargestellt sind. Abzuführende Wärmeenergie wird durch Pfeile mit dem Bezugszeichen 300 symbolisiert. Kühlluft wird durch Pfeile mit dem Bezugszeichen 301 symbolisiert.

Die Darstellung gemäß FIG 5 zeigt schematisch eine erste dreidimensionale Transportstruktur 200 zum Transport von Kondensat 260 und eine zweite dreidimensionale Transportstruktur 220 zum Transport von Dampf 270, wobei sich eine Symmetrie um eine Achse 500 ergibt.

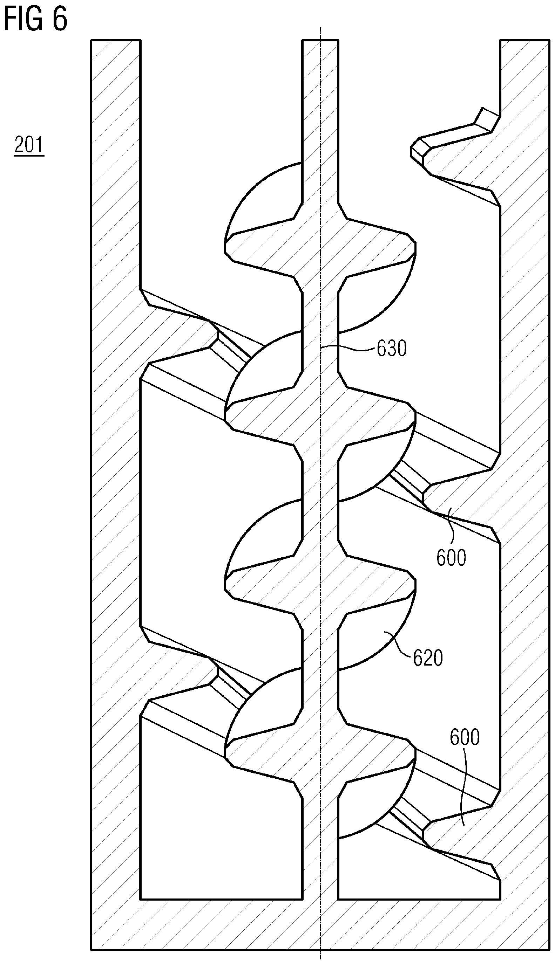

Die Darstellung gemäß FIG 6 zeigt eine gewindeartige erste dreidimensionale Transportstruktur 600 und eine wendelartige zweite dreidimensionale Transportstruktur 620 um einen Wendelkern 630, welcher ein Teil eines Füllkörpers 201 für den Hohlraum der Hohlwelle des Rotors der elektrischen Maschine ist.

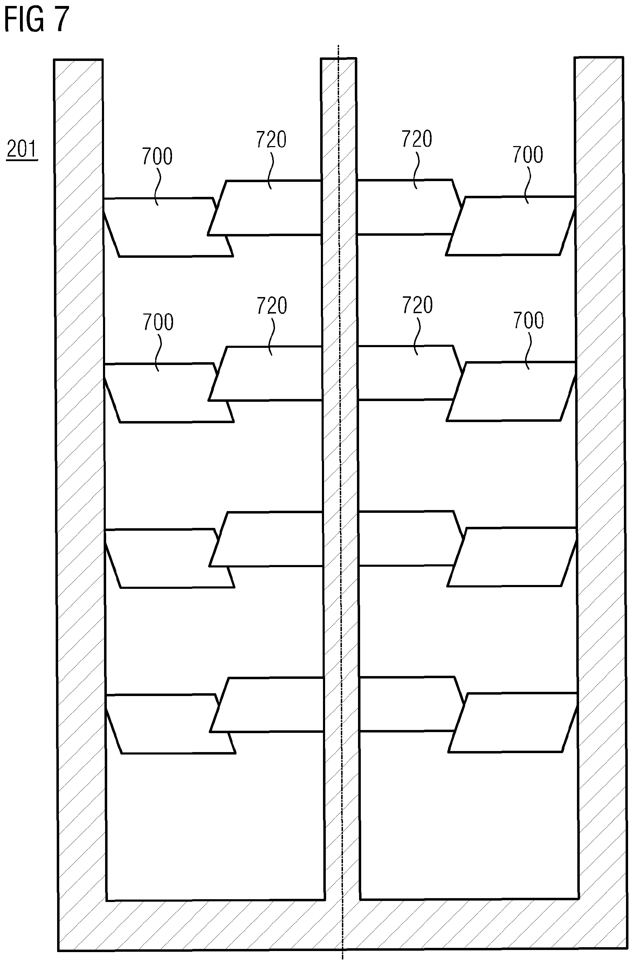

Die Darstellung gemäß FIG 7 zeigt einen Füllkörper 201 mit Flügel 700 mit einem ersten Anstellwinkel als erste dreidimensionale Transportstruktur und Flügel 720 mit einem zweiten Anstellwinkel als zweite dreidimensionale Transportstruktur.

## Patentansprüche

1. Elektrische Maschine (100) welche einen Stator (107) und einen Rotor (101) aufweist, wobei der Rotor (101) eine Hohlwelle (102) aufweist, wobei mittels der Hohlwelle (102) ein abgeschlossener Hohlraum (103) ausgebildet ist, wobei der abgeschlossene Hohlraum (103) zur Aufnahme eines Kältemittels vorgesehen ist, wobei im abgeschlossenen Hohlraum (103) eine dreidimensionale Transportstruktur (200,220) zum Transport des Kältemittels vorgesehen ist,
**dadurch gekennzeichnet, dass** die dreidimensionale Transportstruktur (200,220) eine Vielzahl von Flügel (700,720) aufweist, wobei eine erste Vielzahl von Flügeln (700) eine erste Flügelstellung aufweisen und wobei ein zweite Vielzahl von Flügeln (720) eine zweite Flügelstellung aufweisen, wobei die erste Flügelstellung zum Transport des Kältemittels in einem ersten Aggregatszustand vorgesehen ist und wobei die zweite Flügelstellung zum Transport des Kältemittels in einem zweiten Aggregatszustand vorgesehen ist.

2. Elektrische Maschine (100) welche einen Stator (107) und einen Rotor (101) aufweist, wobei der Rotor (101) eine Hohlwelle (102) aufweist, wobei mittels der Hohlwelle (102) ein abgeschlossener Hohlraum (103) ausgebildet ist, wobei der abgeschlossene Hohlraum (103) zur Aufnahme eines Kältemittels vorgesehen ist, wobei im abgeschlossenen Hohlraum (103) eine dreidimensionale Transportstruktur (200,220,600,620) zum Transport des Kältemittels vorgesehen ist,
**dadurch gekennzeichnet, dass** die dreidimensionale Transportstruktur (200) eine schraubenartige Struktur oder eine schneckenartige Struktur aufweist, wobei eine erste schraubenartige Struktur oder eine schneckenartige Struktur eine erste Windungsrichtung aufweist und wobei ein zweite schraubenartige Struktur oder eine schneckenartige Struktur eine zweite Windungsrichtung aufweist, wobei die erste Windungsrichtung zum Transport des Kältemittels in einem ersten Aggregatszustand vorgesehen ist und wobei die zweite Windungsrichtung zum Transport des Kältemittels in einem zweiten Aggregatszustand vorgesehen ist, wobei ein Füllkörper (201) in den Hohlraum (103) separat eingebracht und befestigt ist, wobei der Füllkörper (201) die schraubenartige Struktur oder schneckenartige Struktur mit der ersten Windungsrichtung und der zweiten Windungsrichtung aufweist.

3. Elektrische Maschine (100) welche einen Stator (107) und einen Rotor (101) aufweist, wobei der Rotor (101) eine Hohlwelle (102) aufweist, wobei mittels der Hohlwelle (102) ein abgeschlossener Hohlraum (103) ausgebildet ist, wobei der abgeschlossene Hohlraum (103) zur Aufnahme eines Kältemittels vorgesehen ist, wobei im abgeschlossenen Hohlraum (103) eine dreidimensionale Transportstruktur (200,220) zum Transport des Kältemittels vorgesehen ist,
**dadurch gekennzeichnet, dass** die dreidimensionale Transportstruktur (200,220) eine schraubenartige Struktur oder eine schneckenartige Struktur aufweist, wobei eine erste schraubenartige Struktur oder eine schneckenartige Struktur eine erste Windungsrichtung aufweist und wobei ein zweite schraubenartige Struktur oder eine schneckenartige Struktur eine zweite Windungsrichtung aufweist, wobei die erste Windungsrichtung zum Transport des Kältemittels in einem ersten Aggregatszustand vorgesehen ist und wobei die zweite Windungsrichtung zum Transport des Kältemittels in einem zweiten Aggregatszustand vorgesehen ist, wobei ein Thermosiphon der elektrischen Maschine (100) die dreidimensionale Transportstruktur (200,220), einen Verdampfer und einen konusförmigen Kondensator aufweist.

4. Elektrische Maschine (100) welche einen Stator (107) und einen Rotor (101) aufweist, wobei der Rotor (101) eine Hohlwelle (102) aufweist, wobei mittels der Hohlwelle (102) ein abgeschlossener Hohlraum (103) ausgebildet ist, wobei der abgeschlossene Hohlraum (103) zur Aufnahme eines Kältemittels vorgesehen ist, wobei im abgeschlossenen Hohlraum (103) eine dreidimensionale Transportstruktur (200,220) zum Transport des Kältemittels vorgesehen ist,
**dadurch gekennzeichnet, dass** die dreidimensionale Transportstruktur (200,220) eine schraubenartige Struktur oder eine schneckenartige Struktur aufweist, wobei eine erste schraubenartige Struktur oder eine schneckenartige Struktur eine erste Windungsrichtung aufweist und wobei ein zweite schraubenartige Struktur oder eine schneckenartige Struktur eine zweite Windungsrichtung aufweist, wobei die erste Windungsrichtung zum Transport des Kältemittels in einem ersten Aggregatszustand vorgesehen ist und wobei die zweite Windungsrichtung zum Transport des Kältemittels in einem zweiten Aggregatszustand vorgesehen ist, wobei in dem abgeschlossenen Hohlraum (103) das Kältemittel nach einem Thermosiphoneffekt zwischen einem warmen und einem kalten Ende (104,105) der Hohlwelle (102) zirkulierbar ist, wobei der den Rotor (101) umgebende Stator (107) innerhalb eines Gehäuses (108) angeordnet und mit diesem thermisch verbunden ist, wobei das Gehäuse (108) stirnseitig zugängliche Kühlkanäle (109) zur Zufuhr eines kühlenden Luftstroms zu auf der Außenseite des Gehäuses (108) vorhandenen Kühlrippen (110) aufweist, wobei stirnseitig des Rotors (101) auf dem kalten Ende (105) der Hohlwelle (102) ein Lüfterrad (120) zum Transport von Kaltluft in die Kühlkanäle (109) montiert ist, welches mit dem kalten Ende (105) der Hohlwelle in thermischer Verbindung steht, wobei das Lüfterrad (120) durch eine Haube (121), die stirnseitig mit dem Gehäuse (108) strömungsdicht abschließt, vollständig abgedeckt ist, wobei die Haube (121) eine axiale Zuluftöffnung aufweist, wobei das Lüfterrad (120) in seinen radial innen liegenden Bereichen in die Zuluftöffnung hineinragende Wärmeübergangsflächen (123) aufweist.

5. Elektrische Maschine (100) nach einem der Ansprüche 1 bis 4,
wobei die dreidimensionale Transportstruktur
(200,220,600,620) derart ausgebildet ist, dass ein Transport des Kältemittels mittels einer Rotation der dreidimensionalen Transportstruktur (200,220,600,620) hervorrufbar ist.

6. Elektrische Maschine (100) nach einem der Ansprüche 1 bis 5,
wobei die dreidimensionale Transportstruktur (200,220,600,620) eine offenporige Schaumstruktur oder eine spiralförmige Kanalstruktur ist.

7. Elektrische Maschine (100) nach einem der Ansprüche 1, 3, 4, 5 oder 6,
wobei im Hohlraum (103) der Hohlwelle (102) ein Füllkörper (201) vorgesehen ist, wobei der Füllkörper (201) eine erste dreidimensionale Transportstruktur (200,600) zum Transport des Kältemittels aufweist, wobei sich das Kältemittel in einem ersten Aggregatszustand befindet.

8. Elektrische Maschine (100) nach einem der Ansprüche 1, 3, 4, 5, 6 oder 7,
wobei im Hohlraum (103) der Hohlwelle (102) ein Füllkörper (201) vorgesehen ist, wobei der Füllkörper (201) eine zweite dreidimensionale Transportstruktur (220,620) zum Transport des Kältemittels aufweist, wobei sich das Kältemittel in einem zweiten Aggregatszustand befindet.

9. Verfahren zur Herstellung einer elektrischen Maschine (100) nach einem der Ansprüche 1 bis 8,
wobei ein Verfahren zur Herstellung einer dreidimensionalen Transportstruktur (200,220,600,620) zum Transport eines Kältemittels eines Thermosiphons einer elektrischen Maschine (100) verwendet wird, wobei zur Ausbildung der dreidimensionalen Transportstruktur (200,220,600,620) ein additiver Materialauftrag verwendet wird.

10. Verfahren zur Herstellung nach Anspruch 9,
wobei ein metallisches Material verwendet wird, wobei insbesondere ein strahlbasiertes Pulverbettverfahren verwendet wird.

11. Verfahren zur Herstellung nach Anspruch 9,
wobei Selectives Laser Melting verwendet wird.

12. Verfahren zur Herstellung nach einem der Ansprüche 9 bis 11,
wobei der additive Materialauftrag auf eine Welle der elektrischen Maschine (100) erfolgt, insbesondere in einem Hohlraum (103) der Welle.

13. Verfahren zur Herstellung nach einem der Ansprüche 9 bis 12,
wobei der additive Materialauftrag auf einem Körper erfolgt, welcher zur Einbringung in eine Hohlwelle (102) der elektrischen Maschine (100) vorgesehen ist.

## Claims

1. Electrical machine (100) which has a stator (107) and a rotor (101), wherein the rotor (101) has a hollow shaft (102), wherein a closed hollow space (103) is formed by means of the hollow shaft (102), wherein the closed hollow space (103) is provided to accept a coolant, wherein a three-dimensional transport structure (200, 220) is provided in the closed hollow space (103) to transport the coolant,
**characterised in that**
the three-dimensional transport structure (200, 220) has a number of vanes (700, 720), wherein a first number of vanes (700) have a first vane position and wherein a second number of vanes (720) have a second vane position, wherein the first vane position is provided to transport the coolant in a first aggregate state and wherein the second vane position is provided to transport the coolant in a second aggregate state

2. Electrical machine (100) which has a stator (107) and a rotor (101), wherein the rotor (101) has a hollow shaft (102), wherein a closed hollow space (103) is formed by means of the hollow shaft (102), wherein the closed hollow space (103) is provided to accept a coolant, wherein a three-dimensional transport structure (200, 220, 600, 620) is provided in the closed hollow space (103) to transport the coolant, **characterised in that**
the three-dimensional transport structure (200) has a screw-type structure or a worm-type structure, wherein a first screw-type structure or a worm-type structure has a first coiling direction and wherein a second screw-type structure or a worm-type structure has a second coiling direction, wherein the first coiling direction is provided to transport the coolant in a first aggregate state and wherein the second coiling direction is provided to transport the coolant in a second aggregate state, wherein a filler (201) is introduced and attached separately in the hollow space (103), wherein the filler (201) has the screw-type structure or worm-type structure with the first coiling direction and the second coiling direction.

3. Electrical machine (100) which has a stator (107) and a rotor (101), wherein the rotor (101) has a hollow shaft (102), wherein a closed hollow space (103) is formed by means of the hollow shaft (102), wherein the closed hollow space (103) is provided to accept a coolant, wherein a three-dimensional transport structure (200, 220) is provided in the closed hollow space (103) to transport the coolant,
**characterised in that**
the three-dimensional transport structure (200, 220) has a screw-type structure or a worm-type structure, wherein a first screw-type structure or a worm-type structure has a first coiling direction and wherein a second screw-type structure or a worm-type structure has a second coiling direction, wherein the first coiling direction is provided to transport the coolant in a first aggregate state and wherein the second coiling direction is provided to transport the coolant in a second aggregate state, wherein a thermosiphon of the electrical machine (100) has the three-dimensional transport structure (200, 220), an evaporator and a conical capacitor.

4. Electrical machine (100) which has a stator (107) and a rotor (101), wherein the rotor (101) has a hollow shaft (102), wherein a closed hollow space (103) is formed by means of the hollow shaft (102), wherein the closed hollow space (103) is provided to accept a coolant, wherein a three-dimensional transport structure (200, 220) is provided in the closed hollow space (103) to transport the coolant,
**characterised in that**
the three-dimensional transport structure (200, 220) has a screw-type structure or a worm-type structure, wherein a first screw-type structure or a worm-type structure has a first coiling direction and wherein a second screw-type structure or a worm-type structure has a second coiling direction, wherein the first coiling direction is provided to transport the coolant in a first aggregate state and wherein the second coiling direction is provided to transport the coolant in a second aggregate state, wherein in the closed hollow space (103) the coolant can be circulated in accordance with a thermisophon effect between a warm and a cold end (104, 105) of the hollow shaft (102), wherein the stator (107) surrounding the rotor (101) is arranged within a housing (108) and is thermally connected hereto, wherein the housing (108) has cooling ducts (109) which are accessible on the face side for supplying a cooling air flow to cooling ribs (110) that are present on the exterior of the housing (108), wherein a fan impeller (120) to transport cold air into the cooling ducts (109) is mounted on the face side of the rotor (101) on the cold end (105) of the hollow shaft (102), said fan impeller (120) being thermally connected to the cold end (105) of the hollow shaft, wherein the fan impeller (120) is covered entirely by a hood (121), which closes in a fluid-tight manner on the face side of the housing (108), wherein the hood (121) has an axial supply air opening, wherein the fan impeller (120) has heat transfer surfaces (123) which project into the supply air opening in its radial internal regions.

5. Electrical machine (100) according to one of claims 1 to 4, wherein the three-dimensional transport structure (200, 220, 600, 620) is formed in such a way that transport of the coolant can be caused by means of a rotation of the three-dimensional transport structure (200, 220, 600, 620).

6. Electrical machine (100) according to one of claims 1 to 5, wherein the three-dimensional transport structure (200, 220, 600, 620) is an open pore foam structure or a spiral-shaped channel structure.

7. Electrical machine (100) according to one of claims 1, 3, 4, 5 or 6,
wherein a filler (201) is provided in the hollow space (103) of the hollow shaft (102), wherein the filler (201) has a first three-dimensional transport structure (200, 600) to transport the coolant, wherein the coolant is in a first aggregate state.

8. Electrical machine (100) according to one of claims 1, 3, 4, 5, 6 or 7,
wherein a filler (201) is provided in the hollow space (103) of the hollow shaft (102), wherein the filler (201) has a second three-dimensional transport structure (220, 620) to transport the coolant, wherein the coolant is in a second aggregate state.

9. Method for the manufacture of an electrical machine (100) according to one of claims 1 to 8,
wherein a method for the manufacture of a three-dimensional transport structure (200, 220, 600, 620) is employed to transport a coolant of a thermosiphon of an electrical machine (100), wherein an additive material coating is employed to form the three-dimensional transport structure (200, 220, 600, 620).

10. Method for manufacture according to claim 9, wherein a metallic material is employed, wherein a beam-based powder bed process is employed.

11. Method for manufacture according to claim 9, wherein selective laser melting is employed.

12. Method for manufacture according to one of claims 9 to 11, wherein the additive material coating is carried out on a shaft of the electrical machine (100), in particular in a hollow space (103) of the shaft.

13. Method for manufacture according to one of claims 9 to 12, wherein the additive material coating is carried out on a body which is provided for introduction into a hollow shaft (102) of the electrical machine (100).

## Revendications

1. Machine (10) électrique, qui a un stator (107) et un rotor (101), le rotor (101) ayant un arbre (102) creux, dans laquelle il est formé un espace (103) creux fermé au moyen de l'arbre (102) creux, dans laquelle l'espace (103) creux fermé est prévu pour la réception d'un fluide réfrigérant, dans laquelle il est prévu, dans l'espace (103) creux fermé, une structure (200, 220) de transport en trois dimensions pour le transport du fluide réfrigérant, **caractérisée en ce que** la structure (200, 220) de transport en trois dimensions a une pluralité d'ailes (700, 720), une première pluralité d'ailes (700) ayant une première position d'aile et une deuxième pluralité d'ailes (720) ayant une deuxième position d'aile, la première position d'aile étant prévue pour le transport du fluide réfrigérant dans un premier état physique et la deuxième position d'aile pour le transport du fluide réfrigérant dans un deuxième état physique.

2. Machine (100) électrique, qui a un stator (107) et un rotor (101), le rotor (101) ayant un arbre (102) creux, dans laquelle il est formé un espace (103) creux fermé au moyen de l'arbre (102) creux, dans laquelle l'espace (103) creux fermé est prévu pour la réception d'un fluide réfrigérant, dans laquelle il est prévu, dans l'espace (103) creux fermé, une structure (200, 220, 600, 620) de transport en trois dimensions pour le transport du fluide réfrigérant, **caractérisée en ce que** la structure (200) de transport en trois dimensions a une structure hélicoïdale ou une structure en spirale, une première structure hélicoïdale ou une structure en spirale ayant un premier sens de spire et une deuxième structure hélicoïdale ou une structure en spirale ayant un deuxième sens de spire, le premier sens de spire étant prévu pour le transport du fluide réfrigérant dans un premier état physique et le deuxième sens de spire pour le transport du fluide réfrigérant dans un deuxième état physique, un corps (201) de remplissage étant introduit séparément dans l'espace (103) creux et y étant fixé, le corps (201) de remplissage ayant la structure hélicoïdale ou la structure en spirale ayant le premier sens de spire et le deuxième sens de spire.

3. Machine (10) électrique, qui a un stator (107) et un rotor (101), le rotor (101) ayant un arbre (102) creux, dans laquelle il est formé un espace (103) creux fermé au moyen de l'arbre (102) creux, dans laquelle l'espace (103) creux fermé est prévu pour la réception d'un fluide réfrigérant, dans laquelle il est prévu, dans l'espace (103) creux fermé, une structure (200, 220) de transport en trois dimensions pour le transport du fluide réfrigérant, **caractérisée en ce que** la structure (200, 220) de transport en trois dimensions a une structure hélicoïdale ou une structure en spirale, une première structure hélicoïdale ou une structure en spirale ayant un premier sens de spire et une deuxième structure hélicoïdale ou une structure en spirale ayant un deuxième sens de spire, le premier sens de spire étant prévu pour le transport du fluide réfrigérant dans un premier état physique et le deuxième sens de spire pour le transport du fluide réfrigérant dans un deuxième état physique, dans laquelle un thermosiphon de la machine (100) électrique a la structure (200, 220) de transport en trois dimensions, un évaporateur et un condenseur en forme de cône.

4. Machine (10) électrique, qui a un stator (107) et un rotor (101), le rotor (101) ayant un arbre (102) creux, dans laquelle il est formé un espace (103) creux fermé au moyen de l'arbre (102) creux, dans laquelle l'espace (103) creux fermé est prévu pour la réception d'un fluide réfrigérant, dans laquelle il est prévu dans l'espace (103) creux fermé, une structure (200, 220) de transport en trois dimensions pour le transport du fluide réfrigérant, **caractérisée en ce que** la structure (200) de transport en trois dimensions a une structure hélicoïdale ou une structure en spirale, une première structure hélicoïdale ou une structure en spirale ayant un premier sens de spire et une deuxième structure hélicoïdale ou une structure en spirale ayant un deuxième sens de spire, le premier sens de spire étant prévu pour le transport du fluide réfrigérant dans un premier état physique et le deuxième sens de spire pour le transport du fluide réfrigérant dans un deuxième état physique, dans laquelle, dans l'espace (103) creux fermé, le fluide réfrigérant peut être mis en circulation par un effet de thermosiphon entre une extrémité (104) chaude et une extrémité (105) froide de l'arbre (102) creux, le stator (107) entourant le rotor (101) étant disposé dans une carcasse (108) et étant relié thermiquement à celle-ci, la carcasse (108) ayant des conduits (109) de refroidissement accessibles du côté frontal pour envoyer un courant d'air de refroidissement à des ailettes (110) de refroidissement prévues du côté extérieur de la carcasse (108), dans laquelle il est monté, du côté frontal du rotor (101), à l'extrémité (105) froide de l'arbre (102) creux, une roue (120) de ventilateur pour le transport d'air froid dans les conduits (109) de refroidissement, roue qui est en liaison thermique avec l'extrémité (105) froide de l'arbre creux, la roue (120) du ventilateur, recouverte complètement par une hotte (121), qui ferme d'une manière étanche au courant du côté frontal avec la carcasse (108), la hotte (121) ayant une ouverture axiale d'apport d'air, la roue (120) du ventilateur ayant, dans ses parties se trouvant à l'intérieur radialement, des surfaces (123) de transmission de la chaleur pénétrant dans l'ouverture d'apport d'air.

5. Machine (100) électrique suivant l'une des revendications 1 à 4,
dans laquelle la structure (200, 220, 600, 620) de transport en trois dimensions est constituée de manière à pouvoir provoquer un transport du fluide réfrigérant au moyen d'une rotation de la structure (200, 220, 600, 620) de transport en trois dimensions.

6. Machine (100) électrique suivant l'une des revendications 1 à 5,
dans laquelle la structure (200, 220, 600, 620) de transport en trois dimensions a une structure alvéolaire à pore ouvert ou une structure en canal en forme de spirale.

7. Machine (100) électrique suivant l'une des revendications 1, 3, 4, 5 ou 6,
dans laquelle il est prévu, dans l'espace (103) creux de l'arbre (102) creux, un corps (201) de remplissage, le corps (201) de remplissage ayant une première structure (200, 600) de transport en trois dimensions pour le transport du fluide réfrigérant, le fluide réfrigérant se trouvant dans un premier état physique.

8. Machine (100) électrique suivant l'une des revendications 1, 3, 4, 5, 6 ou 7,
dans laquelle il est prévu, dans l'espace (103) creux de l'arbre (102) creux, un corps (201) de remplissage, le corps (201) de remplissage ayant une deuxième structure (220, 620) de transport en trois dimensions pour le transport du fluide réfrigérant, le fluide réfrigérant se trouvant dans un deuxième état physique.

9. Procédé de fabrication d'une machine (100) électrique suivant l'une des revendications 1 à 8,
dans lequel on utilise un procédé de fabrication d'une structure (200, 220, 600, 620) de transport en trois dimensions pour le transport d'un fluide réfrigérant d'un thermosiphon d'une machine (100) électrique, dans laquelle on utilise, pour constituer la structure (200, 220, 600, 620) de transport en trois dimensions, un dépôt de matière en addition.

10. Procédé de fabrication suivant la revendication 9,
dans lequel on utilise un matériau métallique, en utilisant notamment un procédé à lit de poudre reposant sur un faisceau.

11. Procédé de fabrication suivant la revendication 9,
dans lequel on utilise une fusion laser sélective.

12. Procédé de fabrication suivant l'une des revendications 9 à 11,
dans lequel le dépôt de matière en addition s'effectue sur un arbre de la machine (100) électrique, notamment dans un espace (103) creux de l'arbre.

13. Procédé de fabrication suivant l'une des revendications 9 à 12,
dans lequel le dépôt de matière en addition s'effectue sur un corps, qui est prévu pour être introduit dans un arbre (102) creux de la machine (100) électrique.
